Europäisches Patentamt

European Patent Office

Office européen des brevets

(11) Veröffentlichungsnummer: **0 482 650 A1**

## EUROPÄISCHE PATENTANMELDUNG

(21) Anmeldenummer: **91118180.8**

(22) Anmeldetag: **24.10.91**

(51) Int. Cl.5: **B60R 9/10**

(30) Priorität: **24.10.90 DE 4033817**

(43) Veröffentlichungstag der Anmeldung:
**29.04.92 Patentblatt 92/18**

(84) Benannte Vertragsstaaten:
**DE FR GB IT SE**

(71) Anmelder: **Tittel, Eberhard**
**Lagerstrasse 1**
**W-7981 Grünkraut-Gullen(DE)**

(72) Erfinder: **Tittel, Eberhard**
**Lagerstrasse 1**
**W-7981 Grünkraut-Gullen(DE)**

(74) Vertreter: **Schmidt-Evers, Jürgen, Dipl.-Ing. et al**
**Patentanwälte Mitscherlich & Partner,**
**Steinsdorfstrasse 10**
**W-8000 München 22(DE)**

(54) **Fahrradhalter, insbesondere zur Befestigung an einem Lastenträger für ein Fahrrad.**

(57) Die Erfindung betrifft einen Fahrradhalter, insbesondere zur Befestigung an einem Lastenträger für ein Fahrzeug, mit einer Schiene zum Abstützen der Räder des zu haltenden Fahrrads, mit einer Befestigungseinrichtung zur lösbaren Befestigung der Schiene am Lastenträger und mit einer an der Schiene angelenkten Stütze, die eine abschließbare Spanneinrichtung zum Einspannen des Fahrradrahmens aufweist und von einer schienennahen Außerbetriebsstellung bis in eine schienenferne Betriebsstellung und zurück verschwenkbar ist. Um einen Fahrradhalter mit verbesserter Diebstahlsicherung zu schaffen, wird erfindungsgemäß eine Sperranordnung (35,36;44) für den Sperreingriff in die Befestigungseinrichtung (22,24,25) bei in der Betriebsstellung befindlicher Stütze (3) und eine Sicherungsanordnung (32) für die Anlenkung der Stütze (3) an der Schine (1) vorgeschlagen.

FIG. 1

Die Erfindung betrifft einen Fahrradhalter, insbesondere zur Befestigung an einem Lastenträger für ein Fahrzeug, nach dem Oberbegriff des Patentanspruchs 1.

Aus der Praxis ist ein derartiger Fahrradhalter bekannt, an dem ein Fahrrad mittels der abschließbaren Spanneinrichtung diebstahlsicher befestigt werden kann. Da jedoch das Fahrrad an der Schiene selbst lediglich mittels lösbarer Riemen gehalten ist, die durch die Räder des Fahrrads und um die Schiene geschlungen sind, und die Anlenkung der Stütze an der Schiene gelöst werden kann, ist es möglich, das Fahrrad mitsamt der Stütze zu entwenden. Das Fahrrad kann aber auch ohne Lösen der Anlenkung der Stütze an der Schiene entwendet werden, und zwar mitsamt dem Fahrradhalter. Zu diesem Zweck ist es lediglich erforderlich, die Befestigungseinrichtung zu lösen, mit der die Schiene und damit die Stütze und das gesicherte Fahrrad am Lastenträger befestigt sind.

Es ist Aufgabe der Erfindung, einen Fahrradhalter der eingangs genannten Art mit verbesserter Diebstahlsicherung zu schaffen.

Diese Aufgabe wird erfindungsgemäß durch eine Sperranordnung für den Sperreingriff in die Befestigungseinrichtung bei in der Betriebsstellung befindlicher Stütze und durch eine Sicherungsanordnung für die Anlenkung der Stütze an der Schiene gelöst. Das Fahrrad ist über die den Fahrradrahmen einspannenden Spanneinrichtung, wenn sie abgeschlossen ist, diebstahlsicher an der in der Betriebsstellung befindlichen Stütze befestigt und verhindert aufgrund der Anordnung seiner Räder vor und hinter einer durch die Spanneinrichtung verlaufenden Normalen zur Schiene ein Verschwenken der Stütze. Auf diese Weise ist sichergestellt, daß die Sperranordnung im Sperreingriff mit der Befestigungseinrichtung verbleibt, so daß die Stütze diebstahlsicher am Lastenträger befestigt ist. Die Anlenkung der Stütze an der Schine ist durch die Sicherungsanordnung diebstahlsicher ausgebildet. Der Fahrradhalter kann nur dann vom Lastenträger entfernt oder an diesem befestigt werden, wenn sich die Stütze bei nicht aufgespanntem Fahrrad in der Außerbetriebsstellung und gleichzeitig die Sperranordnung außer Sperreingriff mit der Befestigungseinrichtung befinden.

Um den Fahrradhalter auch bei in der Außerbetriebsstellung befindlicher Stütze vor Diebstahl zu schützen und gleichzeitig seine Montage an bzw. Demontage vom Lastenträger sicherzustellen, kann sich die Sperranordnung sowohl in der Betriebsals auch in der Außerbetriebsstellung im Sperreingriff und in einer Montagestellung außer Sperreingriff mit der Befestigungseinrichtung befinden, wobei eine Arretieranordnung zum Arretieren der in der Außerbetriebsstellung befindlichen Stütze vorgesehen ist.

Gemäß einer bevorzugten Weiterbildung der Erfindung befindet sich die Stütze in der Montagestellung in dem sich dem Schwenkbereich zwischen Betriebs- und Außerbetriebsstellung anschließenden Schwenkbereich. Dabei kann sich die Sperranordnung in der Außerbetriebsstellung der Stütze im völligen Sperreingriff, nach Verschwenken bis in die Betriebstellung im teilweisen Sperreingriff und nach weiterer Verschwenkung bis in die Montagestellung außer Sperreingriff mit der Befestigungseinrichtung befinden. Hierbei umfaßt die Sperranordnung vorzugsweise einen im wesentlichen U-förmigen, an der Stütze angebrachten Sperrbügel, dessen geschlossene Seite bei in der Betriebs- und Außerbetriebsstellung sowie im Schwenkbereich dazwischen befindlicher Stütze dem rückwärtigen, von der Stütze bei ihrer Verschwenkung zwischen der Betriebs- und der Außerbetriebsstellung überstrichenen Schienenabschnitt zugewandt ist.

Gemäß einer alternativen Ausführung befindet sich die Stütze in der Montagestellung im Schwenkbereich zwischen ihrer Betriebs- und Außerbetriebsstellung. Dabei kann die Sperranordnung ein erstes und ein zweites Sperrmittel umfassen, wobei sich das erste Sperrmittel in der Betriebsstellung der Stütze im Sperreingriff und in der Außerbetriebsstellung außer Sperreingriff mit der Befestigungseinrichtung und das zweite Sperrmittel in der Betriebsstellung der Stütze außer Sperreingriff und in der Außerbetriebsstellung im Sperreingriff mit der Befestigungseinrichtung befindet. Hierbei umfaßt das erste Sperrmittel vorzugsweise einen im wesentlichen U-förmigen, an der Stütze angebrachten Sperrbügel, dessen offene Seite bei in der Betriebsstellung befindlicher Stütze dem rückwärtigen, von der Stütze bei ihrer Verschwenkung zwischen der Betriebs- und der Außerbetriebsstellung überstrichenen Schienenabschnitt zugewandt ist, wobei das zweite Sperrmittel eine Sperrzunge umfaßt und der Sperrbügel und die Sperrzunge auf einander gegenüberliegenden Seiten einer durch die Befestigungseinrichtung gelegten, quer zur Schiene verlaufenden Querachse angeordnet sind.

Vorteilhafterweise umfaßt die Befestigungseinrichtung wenigstens eine Schraubbefestigung mit einer Flügelmutter. Hierbei kann die Sperranordnung während des Sperreingriffs mit der Befestigungseinrichtung in den in der Drehebene der Flügel der Flügelmutter liegenden, von den äußersten Enden der Flügel bei Drehung der Flügelmutter umschriebenen Kreis sperrend eingreifen.

Gemäß einer Weiterbildung der Erfindung umfaßt die Sicherungsanordnung wenigstens ein durch die Befestigungseinrichtung an Ort und Stelle gehaltenes, den Zugang zur Anlenkung sperrendes bzw. ein lösen derselben verhinderndes Sicherungsblech. Dabei kann die Anlenkung wenigstens eine Schwenkachse in Form einer Kopfschraube mit einer Mutter und das Sicherungsblech die Mutter wenigstens teilweise umfassen.

Vorteilhafterweise umfaßt die Arrtieranordnung wenigstens einen Arretiervorsprung an der Spanneinrichtung, der sich bei in der Außerbetriebsstellung befindlicher Stütze und gespannter Spanneinrichtung in kraft- und/oder formschlüssigem Eingriff und bei nichtgespannter Spanneinrichtung außer Eingriff mit der Schiene befindet.

Vorzugsweise umfaßt die Schiene im Eingriffsbereich der Arretieranordnung ein Verstärkungselement. Hierbei kann die Schiene U- oder V-förmig mit umgerollten Wulsträndern und wenigstens einer der Wulstränder für den Formschlußeingriff mit wenigsten einem der Arretiervorsprünge ausgebildet sein. Günstig ist auch eine Ausbildung, gemäß welcher das Verstärkungselement wenigstens einen aus der Schiene herausragenden Randvorsprung aufweist, der für den Formschlußeingriff mit einem der Arretiervorsprünge ausgebildet ist.

Nachstehend ist die Erfindung anhand zweier Ausführungsbeispiele unter Bezugnahme auf die Zeichnung näher beschrieben.

Es zeigen:

Fig.1 eine perspektivische Darstellung des erfingsgemäßen Fahrradhalters nach dem ersten Ausführungsbeispiel mit bis in die Betriebsstellung angehobener Stütze,

Fig.2 eine Draufsicht des in Figur 1 mit A bezeichneten Teils des Fahrradhalters mit bis in die Außerbetriebsstellung abgesenkter Stütze,

Fig.3 eine Seitenansicht des Fahrradhalters mit abgesenkter Stütze bei Betrachtung in Richtung des Pfeils $S_L$ in Figur 2,

Fig.4. eine Seitenansicht des Fahrradhalters mit abgesenkter Stütze bei Betrachtung in Richtung des Pfeils $S_R$ in Figur 2,

Fig.5 eine Seitenansicht des Fahrradhalters mit angehobener Stütze bei Betrachtung in Richtung des Pfeils $S_L$ in Figur 2,

Fig.6 eine Seitenansicht des Fahrradhalters mit angehobener Stütze bei Betrachtung in Richtung des Pfeils $S_R$ in Figur 2,

Fig.7 eine perspektivische Darstellung des erfindungsgemäßen Fahrradhalters nach dem zweiten Ausführungsbeispiel mit bis in die Betriebsstellung angehobener Stütze,

Fig.8 eine perspektivische Darstellung des Fahrradhalters nach Figur 7 mit bis in die Außerbetriebstellung abgesenkter Stütze,

Fig.9 einen Halbschnitt entlang der Linie IX-IX in Figur 1, der die Arretierung der abgesenkten Stütze an einem Verstärkungselement der Schiene zeigt, und

Fig.10 einen Halbschnitt entsprechend Figur 9, der die Arretierung der abgesenkten Stütze an der Schiene selbst zeigt.

Der erfindungsgemäße Fahrradhalter nach dem ersten und zweiten Ausführungsbeispiel umfaßt eine Schiene 1, einen Schienenträger 2, eine Stütze 3 mit einer Spanneinrichtung 4 sowie eine Diebstahlsicherung.

Die Schiene 1 dient zur Aufnahme der nicht gezeigten Räder eines zu haltenden Fahrrades. Zu diesem Zweck besteht sie aus einem Schienenboden 5 und zwei V-förmig von diesen abstehenden Schenkeln 6. Die freien Enden der Schenkel 6 sind nach außen zur Bildung von Wulsträndern 7 umgerollt.

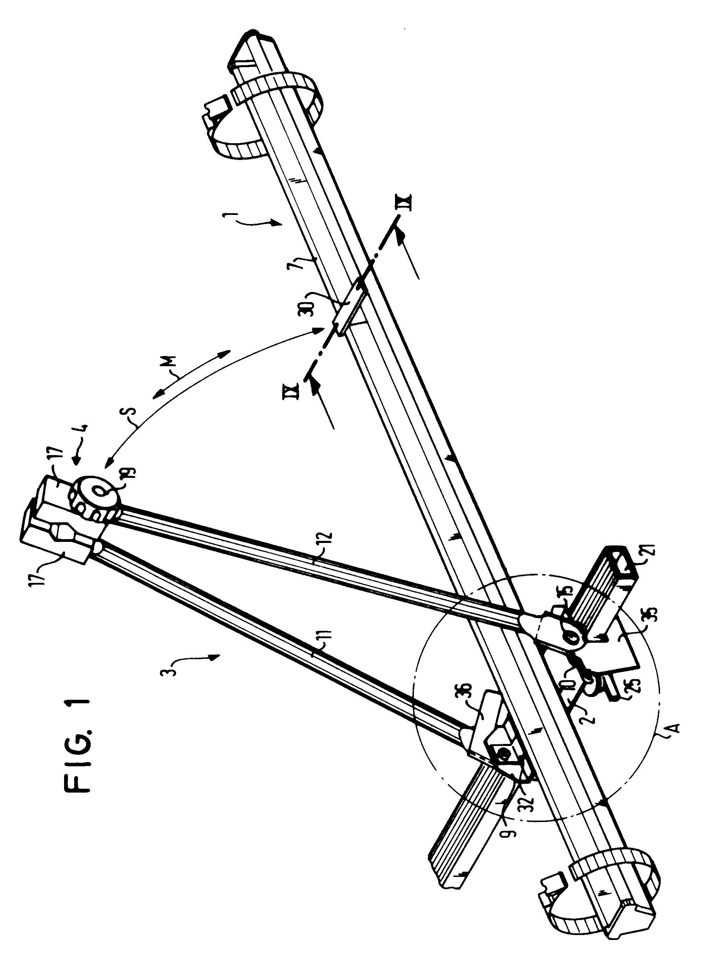

Der Schienenträger 2 ist ein quer zur Schiene verlaufender, mit Nieten 8 am Schienenboden 5 befestigter Flachstahl, dessen beide freien Enden beidseits der Schiene 1 zur Bildung von Flanschteilen 9, 10 nach oben umgebogen sind. Wie in den Figuren 1,7 und 8 gezeigt, ist der Schienenträger 2 an der Schiene 1 mit unterschiedlichen Abständen von deren Enden befestigt und unterteilt auf diese Weise die Schiene 1 in einen kurzen und einen langen Schienenabschnitt.

Die Stütze 3 besteht aus zwei rohrförmigen Stützarmen 11,12, die mit je einem ihrer abgeflachten Enden an dem Flanschteil 9 bzw. 10 angedeudet) des Schienenträgers 2 angelenkt sind. Die Anlenkung umfaßt für jeden Stützarm 11,12 eine vom Bolzenteil 13 einer Kopfschraube 14 gebildete Schwenkachse, die entsprechende Bohrungen in den Flanschteilen 9 bzw. 10 und in den Stützarmen 11 bzw. 12 durchsetzt. Der Schraubenkopf 15 jeder Kopfschraube 14 liegt an dem abgeflachten Ende des jeweiligen Stürzarms 11 bzw. 12 und dieses abgeflachte Ende der der Schiene 1 abgewandten Außenseite des jeweiligen Flanschteils 9 bzw. 10. Die zugehörige Befestigungsmutter 16 ist an der jeweils gegenüberliegenden Flanschteil-Innenseite angeordnet.

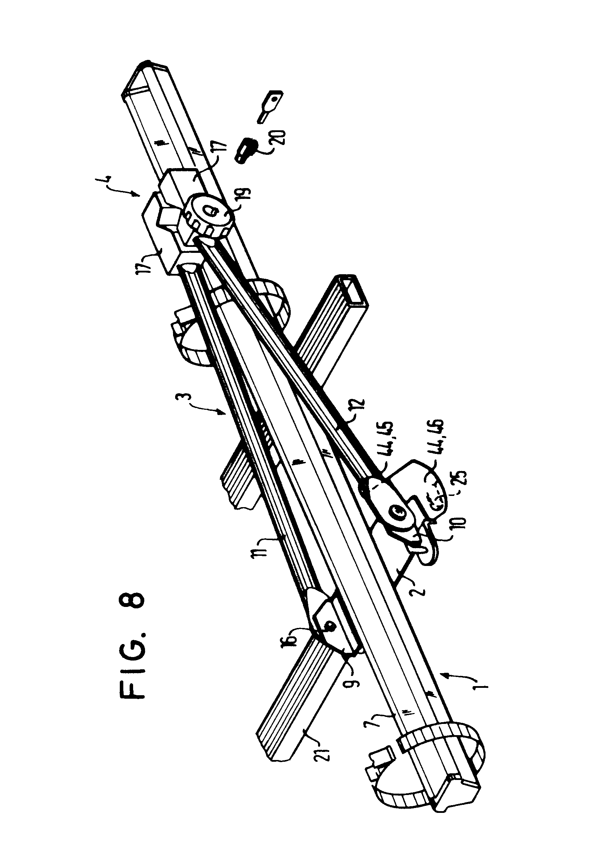

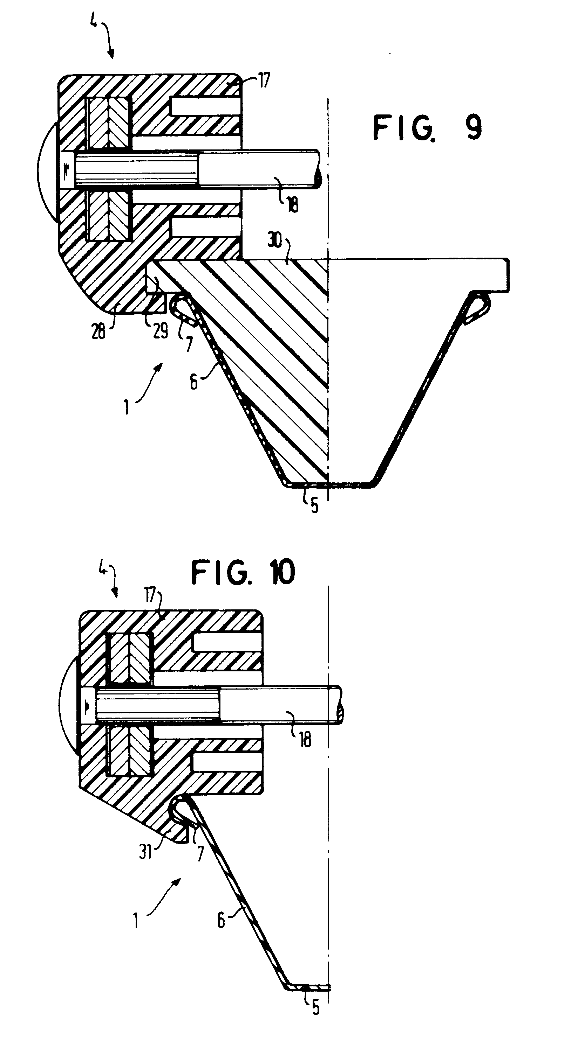

Die Spanneinrichtung 4 besteht in herkömmlicher Weise aus zwei Klemmbacken 17, die auf die freien abgeflachten Enden der Stützarme 11,12 aufgesteckt und auf einem diese Enden durchsetzenden Gewindebolzen 18 (in Figur 9 und 10 angedeudet) mittels einer auf dessen freien, aus einem der Klemmbacken 17 herausragenden Endabschnitt aufgeschraubten Verschlußmutter 19 gegenläufig bewegbar sind. Die Verschlußmutter 19 und damit die Spanneinrichtung 4 ist mittels eines in Figur 8 gezeigten herkömmlichen Steckschlosses 20 abschließbar.

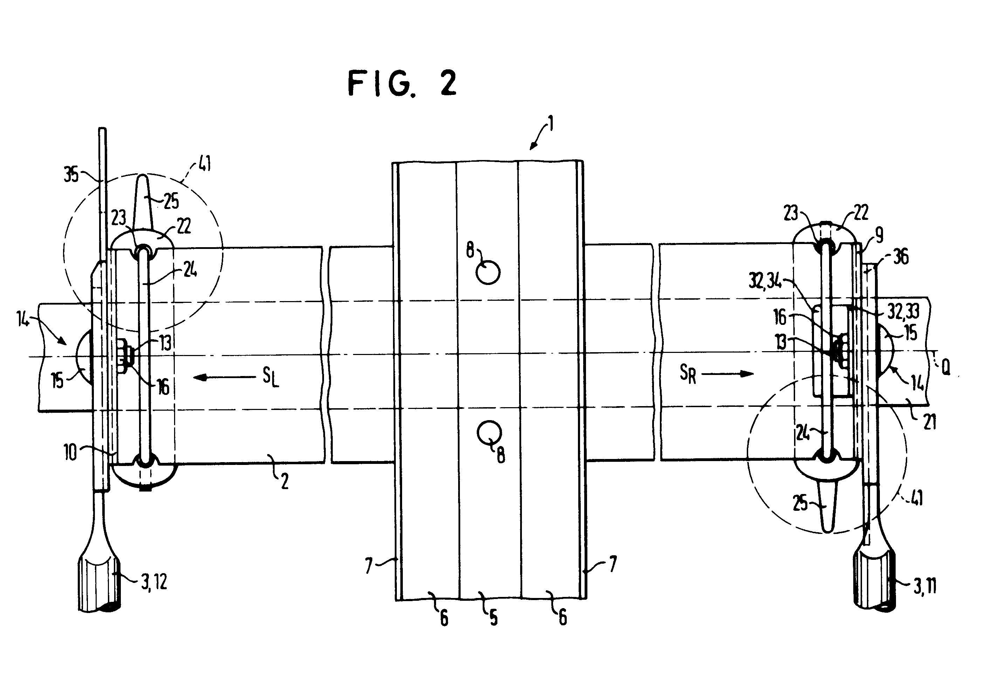

Der Schienenträger 2 und damit der gesamte Fahrradhalter ist mittels einer Befestigungseinrichtung lösbar an einem quer zur Schiene verlaufenden Vierkantrohr 21 eines an einem nicht gezeigten Fahrzeug angebrachten Lastenträgers befestigt. Dabei weist der kürzere Schienenabschnitt als vorderer Abschnitt zur Vorderseite und der längere Schienenabschnitt als rückwärtiger Abschnitt zum Heck des Fahrzeugs. Die Befestigungseinrichtung besteht aus zwei beidseitig der Schiene 1 angeordneten identischen Schraubbefestigungen. Jede Schraubbefestigung umfaßt ein U-Profil 22 mit nach außen abgewinkelten und mit je einer Durchgangsbohrung 23 versehenen Endbereichen, einen U-förmig gebogenen Rundstahl 24 und eine Flügelmutter 25. Das U-Profil 22 verläuft parallel zur Schiene 1 und untergreift den unteren, dem Fahrzeug zugewandten Bereich des Vierkantrohres 21. Der U-förmig gebogene Rundstahl 24 erstreckt sich ebenfalls parallel zur Schiene 1 und übergreift, mit den freien Endbereichen seiner Schenkelabschnitte die Durchgangsbohrungen 23 durchsetzend, den Schienenträger 2 und den oberen Bereich des Vierkantrohres 21. Auf eines der beiden aus den Durchgangsbohrungen 23 nach unten herausragenden Enden der Schenkelabschnitte des Rundstahls 24, das mit einem Gewinde versehen ist, ist die Flügelmutter 25 aufgeschraubt, während das andere Ende zur Bildung eines Riegelhakens 26 nach außen umgebogen ist. Wie in Figur 2 gezeigt, sind die Flügelmuttern 25 auf einander gegenüberliegenden Seiten einer durch die Befestigungseinrichtung gelegten, mit den Schwenkachsen 13 koaxialen Querachse Q angeordnet.

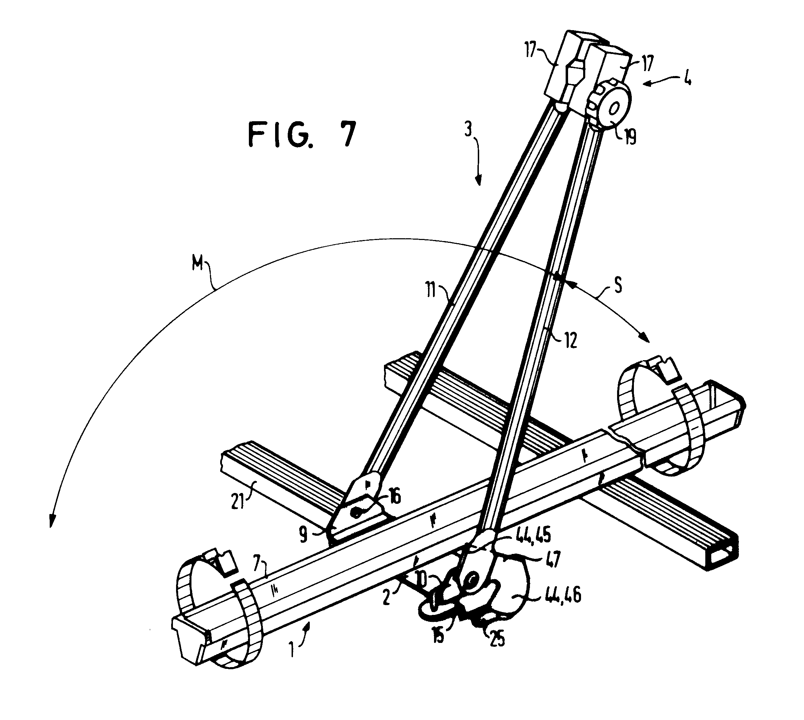

Die Sütze 3 ist von einer in Figur 8 gezeigten schienennahen Außerbetriebsstellung in eine in Figur 1 und Figur 7 gezeigte schienenferne Betriebsstellung und zurück schwenkbar. In der ersteren Stellung ist die Stütze 3 im wesentlichen parallel zum längeren, rückwärtigen Schienenabschnitt, diesem mit ihrer Spanneinrichtung 4 aufliegend, angeordnet. Die Stütze 3 wird in die Betriebsstellung verschwenkt, um den zwischen dem Gabellager und dem Tretlager verlaufenden Holm des Rahmens eines mit seinen Rädern in der Schiene 1 abgestützten Fahrrades zu umspannen. Die Betriebsstellung ist keine absolut definierte, sondern eine von der Rahmengröße des jeweils gehaltenen Fahrrades bestimmte Stellung.

Der erfindungsgemäße Fahrradhalter umfaßt ferner eine Diebstahlsicherung bestehend aus einer Arretieranordnung für die Spanneinrichtung 4, einer Sicherungsanordnung für die Anlenkung 14,16 einer Sperranordnung zum Sperren der Befestigungseinrichtung 22,24,25 sowie der bereits beschriebenen abschließbaren Verschlußmutter 19.

Die Arretieranordnung umfaßt zwei Arretiervorspünge, die an den in der Außerbetriebsstellung der Stütze 3 der Schiene 1 zugewandten Unterseiten der Klemmbacken 17 ausgebildet und für den Formschlußeingriff mit der Schiene 1 geformt sind. Im Ausführungsbeispiel nach Figur 9 erfolgt der Formschlußeingriff der Arretiervorsprünge 28 mittelbar über zwei Randvorsprünge 29 eines in die Schiene 1 eingesetzten, an dieser mittels nicht gezeigter Nieten befestigten Verstärkungselemente 30. Die Randvorsprünge 29 stehen über die Wulstränder 7 der Schiene 1 über und ragen beidseitig derselben nach außen. Gemäß dem Ausführungsbeispiel nach Figur 10 sind die Arretiervorsprünge 31 zum Formschlußeingriff direkt mit den Wulsträndern 7 der Schiene 1 ausgebildet.

Die Sicherungsanordnung besteht aus einem rechtwinklig gebogenen Sicherungsblech 32, dessen einer Schenkel 33 der Innenseite des Flanschteils 9 anliegt und mit einer entsprechend geformten Durchgangsöffnung die zugehörige Befestigungsmutter 16 formschlüssig umgreift. Der andere Schenkel 34 ist zwischen dem Schienenträger 2 und dem diesen übergreifenden Stegabschnitt des zugeordneten U-förmig gebogenen Rundstahls 24 an Ort und Stelle gehalten. Obwohl die Anlenkung der Stütze 3 an dem Schienenträger 2 durch dieses eine Sicherungsblech 32 ausreichend diebstahlgesichert ist, kann, falls gewünscht, auch ein zweites Sicherungsblech verwendet werden, das die dem gegenüberliegenden Flanschteil 10 bzw. dem Stützarm 12 zugeordnete Befestigungsmutter 16 formschlüssig umgreift.

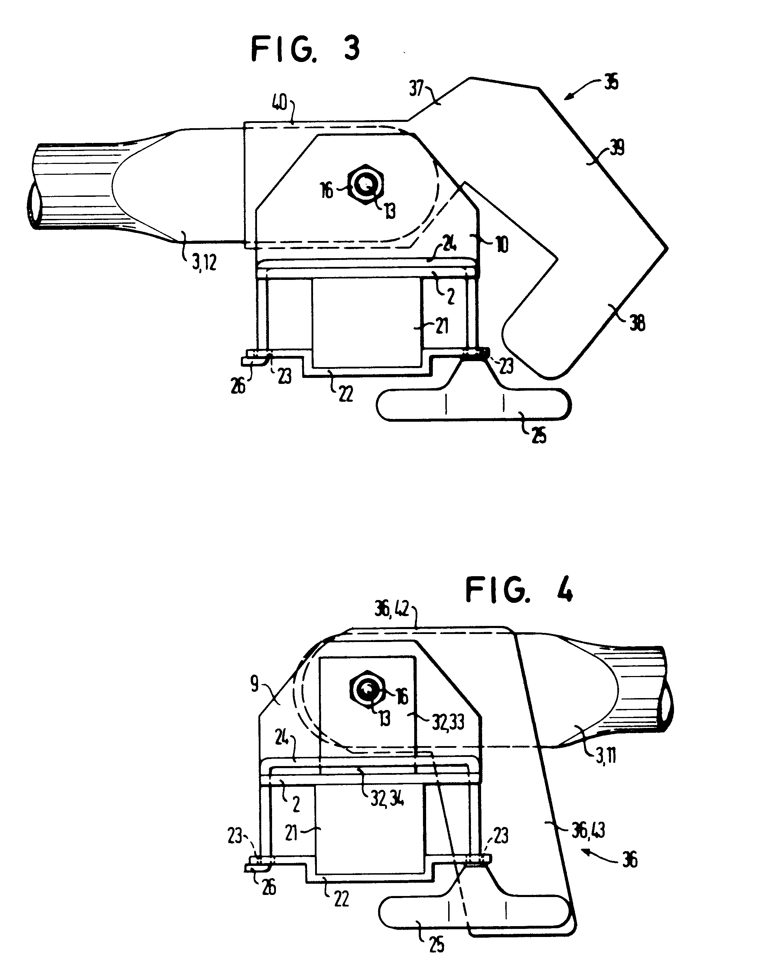

Die Sperranordnung nach dem ersten Ausführungsbeispiel umfaßt einen Sperrbügel 35 und eine Sperrzunge 36. Der Sperrbügel 35 ist zum Sperren der Befestigungseinrichtung 22, 24,25 bei in der Betriebsstellung befindlicher Stütze 3 vorgesehen. Zu diesem Zweck ist er (in der Zeichenebene der Fig.3) im wesentlichen U-förmig mit zwei Schenkelabschnitten 37, 38, einem diese verbindenden Stegabschnitt 39 und einem den Schenkelabschnitt 37 verlängernden Verlängerungsabschnitt 40 ausgebildet, der mit dem Schenkelabschnitt 37 einen stumpfen Winkel einschließt, welcher dem von den Abschnitten 37 bis 39 des Sperrbügels 35 begrenzten Raum abgewandt ist. Der Verlängerungsabschnitt 40 weist einen U-Querschnitt (senkrecht zur Zeichenebene der Figur 3) auf, ist, mit der geschlossenen Seite dieses U-Querschnitts der Außenseite des Flanschteils anliegend, auf das abgeflachte Ende des Stützarms 12 derart aufgeschoben, daß eine in ihm ausgebildete Durchgangsbohrung und die Durchgangsbohrung im abgeflachten Ende des Stützarmes 12 koaxial zueinander ausgerichtet und von der Kopfschraube 14 durchsetzt sind. Dabei ist das freie Ende des Verlängerungsabschnitts 40 dem mit dem Klemmbacken 17 versehenen Ende des Stützarms 12 zugewandt, so daß die offene Seite des Sperrbügels 35 bei in der Betriebsstellung befindlicher Stütze 3 dem rückwärtigen Schienenabschnitt zugewand ist.

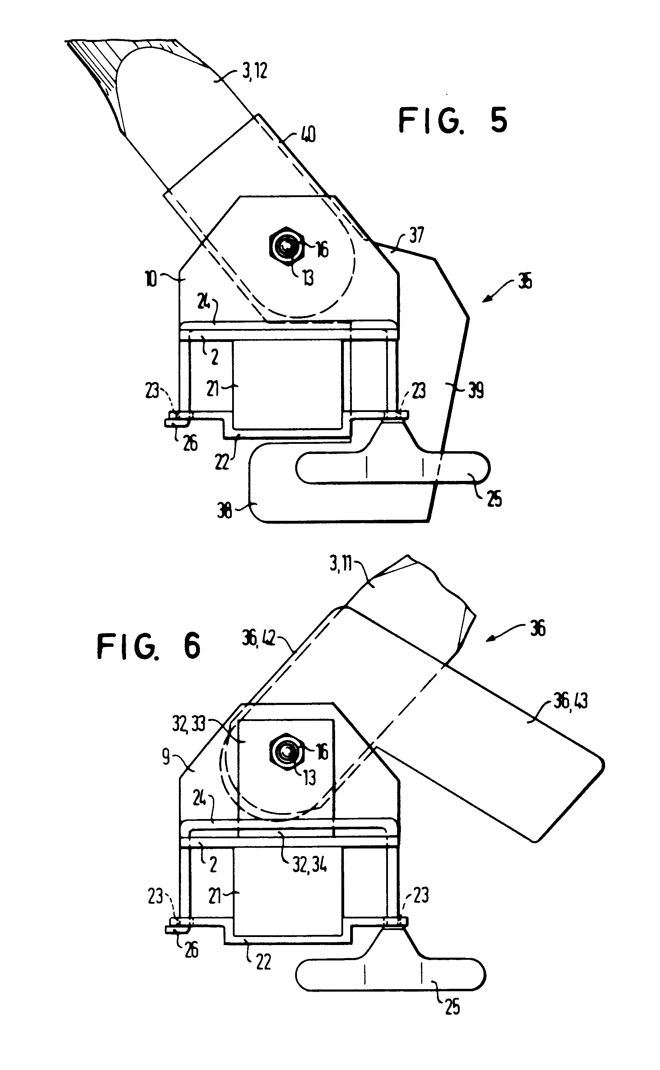

Der Sperrbügel 35 ist insgesamt so ausgebildet, daß sein Schenkelabschnitt 38 bei in der Betriebsstellung befindlicher Stütze 3 in unmittelbarer Nähe parallel zur und in Höhe der zugehörigen, mit ihren Flügeln parallel zur Schiene 1 ausgerichteten Flügelmutter 25 angeordnet ist, und auf diese Weise sperrend in den in der Drehebene der Flügelmutter 25 liegenden, von den äußersten Enden der Flügel bei Drehung der Flügelmutter 25 umschriebenen Kreis 41 sperrend eingreift (siehe Figur 2 und 5). Befindet sich die Stütze 3 jedoch in ihrer Außerbetriebsstellung, dann ist der Schenkelabschnitt 38 des Sperrbügels 35 oberhalb der Drehebene der Flügel der Flügelmutter 25 angeordnet, so daß letztere frei zugänglich ist und gedreht werden kann (siehe Figur 2 und 3).

Die Sperrzunge 36 ist von einfach abgewinkelter Form mit einem ersten Winkelabschnitt 42 und einem zweiten Winkelabschnitt 43, die beide einen Winkel geringfügig größer als 90° einschließen. Der erste Winkelabschnitt 42 ist am abgeflachten Ende des Stützarms 11 in gleicher Weise wie der Verlängerungsabschnitt 40 des Sperrbügels 35 am abgeflachten Ende des Stützarms 12 angebracht, allerdings ist sein freies Ende dem benachbarten freien Ende des Stützarms 11 zugewandt. Auf diese Weise befinden sich der Sperrbügel 35 und die Sperrzunge 36 bzw. deren Winkelabschnitt 43 auf einander gegenüberliegenden Seiten der Querachse Q. Die Sperrzunge 36 ist insgesamt so ausgebildet, daß sie mit dem freien Endbereich ihres zweiten Winkelabschnitts 43 in gleicher Weise wie der Schenkelabschnitt 38 des Sperrbügels 35 den Zugang zur zugeordneten Flügelmutter 25 sperrt und damit ein Drehen derselben verhindert, dies jedoch, im Gegensatz zum Sperrbügel 35, bei in der Außerbetriebsstellung befindlicher Stütze 3 (siehe Figuren 2 und 4). Befindet sich die Stütze 3 jedoch in der Betriebsstellung dann ist der zweite Winkelabschnitt 43 der Sperrzunge 36 in gleicher Weise wie der Schenkelabschnitt 38 des Sperrbügels 35 außer Sperreingriff mit der zugeordneten Flügelmutter 25 (siehe Figur 2 und 6). Alternativ können der Sperrbügel 35 und die Sperrzunge 36 an lediglich einen der beiden Stützarme 11 oder 12, natürlich ebenfalls auf einander gegenüberliegenden Seiten der Querachse Q, angeordnet sein.

Um den Fahrradhalter am Lastenträger befestigen bzw. entfernen zu können, ist eine in Fig.1 mit M angedeutete Montagestellung bzw. ein Montagestellungsbereich im Schwenkbereich zwischen der Betriebsstellung und der Außerbetriebsstellung der Stütze 3 vorgesehen. In dieser Montagestellung befinden sich sowohl der Sperrbügel 35 als auch die Sperrzunge 36 außer Sperreingriff mit der jeweils zugeordneten Flügelmutter 25, so daß diese frei zugänglich sind und gedreht werden können.

Der Fahrradhalter nach dem zweiten Ausführungsbeispiel weist eine Sperranordnung 44 auf, die die Befestigungseinrichtung 22,24,25 ebenfalls in der Betriebs- und der Außerbetriebstellung sperrt, aber so ausgbildet ist, daß die Montagestelle- bzw. der Montagebereich M sich in dem Schwenkbereich der Stütze 3 befindet bzw.

mit diesem Schwenkbereich identisch ist, der sich an den Schwenkbereich S der Stütze 3 zwischen der Außerbetriebs- und der Betriebsstellung anschließt. Die Sperranordnung 44 umfaßt lediglich einen einzigen Sperrbügel, der im wesentlichen U-förmig mit zwei Schenkelabschnitten 45, 46 und einem diese verbindenden Stegabschnitt 47 ausgebildet und mit dem Schenkelabschnitt 45 in gleicher Weise wie der Sperrbügel 35 mit seinem Verlängerungsabschnitt 40 am abgeflachten Ende des Stützarms 12 angebracht ist. Dabei ist das freie Ende des Schenkelabschnitts 45 dem benachbarten freien Ende des Stützarms 12 zugewandt, so daß die geschlossene Seite des Sperrbügels 44 bei in der Betriebsstellung und Außerbetriebsstellung sowie im Schwenkbereich S dazwischen befindlicher Stütze 3 dem rückwärtigen Schienenabschnitt zugewandt ist. Der Sperrbügel 44 ist insgesamt so geformt, daß er sich in der Außerbetriebsstellung der Stütze 3 im völligen Sperreingriff (siehe Figur 8), nach Verschwenken bis in die Betriebsstellung im teilweisen Sperreingriff (siehe Figur 7) und nach weiterer Verschwenkung bis in den Montagestellungsbereich M außer Sperreingriff mit der Befestigungsseinrichtung 22,24,25 befindet. Während des Sperreingriffs ist der Schenkelabschnitt 46 des Sperrbügel 44 ebenso wie der Schenkelabschnitt 38 des Sperrbügels 35 in unmittelbarer Nähe parallel zur und in Höhe der zugehörigen, mit ihren Flügeln parallel zur Schiene 1 ausgerichteten Flügelmutter 25 angeordnet und greift auf diese Weise sperrend in den in der Drehebene der Flügelmutter 25 liegenden, von den äußersten Enden der Flügel bei Drehung der Flügelmutter 25 umschriebenen Kreis 41 sperrend ein. Der Sperrbügel 44 befindet sich außer Sperreingriff, wenn er mit seinem Schenkelabschnitt 46 außerhalb bzw. oberhalb des in der Drehebene der Flügel der Flügelmutter 25 liegenden Kreises 41 angeordnet ist. Das Sicherungsblech 32 ist im Gegensatz zu Figur 1 dem Flanschteil 10 zugeordnet und deshalb in den Figuren 7 und 8 nicht sichtbar.

**Patentansprüche**

1.   Fahrradhalter, insbesondere zur Befestigung an einem Lastenträger für ein Fahrzeug, mit einer Schiene zum Abstützen der Räder des zu haltenden Fahrrads, mit einer Befestigungseinrichtung zur lösbaren Befestigung der Schiene am Lastenträger und mit einer an der Schiene angelenkten Stütze, die eine abschließbare Spanneinrichtung zum Einspannen des Fahrradrahmens aufweist und von einer schienennahen Außerbetriebsstellung bis in eine schienenferne Betriebsstellung und zurück verschwenkbar ist,
    **gekennzeichnet durch**

eine Sperranordnung (35,36;44) für den Sperreingriff in die Befestigungseinrichtung (22,24,25) bei in der Betriebstellung befindlicher Stütze (3) und durch eine Sicherungsanordnung (32) für die Anlenkung der Stütze (3) an der Schiene (1).

2. Fahrradhalter nach Anspruch 1,
   **dadurch gekennzeichnet**,
   daß sich dieSperranordnung (35,36;44) sowohl in der Betriebs- als auch in der Außerbetriebsstellung im Sperreingriff und in einer Montagestellung (M) außer Sperreingriff mit der Befestigungseinrichtung (22,24,25) befindet, und daß eine Arretieranordnung (28;31) zum Arretieren der in der Außerbetriebsstellung befindlichen Stütze (3) an der Schiene (1) vorgesehen ist.

3. Fahrradhalter nach Anspruch 2,
   **dadurch gekennzeichnet**,
   daß sich die Stütze (3) in der Montagestellung (M) in dem sich dem Schwenkbereich zwischen Betriebs- und Außerbetriebsstellung anschließenden Schwenkbereich (S) befindet.

4. Fahrradhalter nach Anspruch 3,
   **dadurch gekennzeichnet,**
   daß sich die Sperranordnung (44) in der Außerbetriebsstellung der Stütze (3) im völligen Sperreingriff, nach Verschwenken bis in die Betriebsstellung im teilweisen Sperreingriff und nach weiterer Verschwenkung bis in die Montagestellung (M) außer Sperreingriff mit der Befestigungseinrichtung (22,24,25) befindet.

5. Fahrradhalter nach Anspruch 3 oder 4,
   **dadurch gekennzeichnet,**
   daß die Sperranordnung (44) einen im wesentlichen U-förmigen, an der Stütze (3) angebrachten Sperrbügel (44) umfaßt, dessen geschlossene Seite bei in der Betriebs- und Außerbetriebsstellung sowie im Schwenkbereich (5) dazwischen befindlicher Stütze (3) dem rückwärtigen, von der Stütze (3) bei ihrer Verschwenkung zwischen der Betriebs- und der Außerbetriebsstellung überstrichenen Schienenabschnitt zugewandt ist.

6. Fahrradhalter nach Anspruch 2,
   **dadurch gekennzeichnet,**
   daß sich die Stütze (3) in der Montagestellung im Schwenkbereich zwischen ihrer Betriebs- und Außerbetriebsstellung befindet.

7. Fahrradhalter nach Anspruch 6,
   **dadurch gekennzeichnet,**
   daß die Sperranordnung (35,36) ein erstes und ein zweites Sperrmittel (35,36) umfaßt, wobei sich das erste Sperrmittel (35) in der Betriebsstellung der Stütze (3) im Sperreingriff und in der Außerbetriebsstellung außer Sperreingriff mit der Befestigungseinrichtung (22,24,25) und das zweite Sperrmittel (36) in der Betriebsstellung der Stütze (3) außer Sperreingriff und in der Außerbetriebsstellung im Sperreingriff mit der Befestigungseinrichtung (22,24,25) befindet.

8. Fahrradhalter nach Anspruch 7,
   **dadurch gekennzeichnet,**
   daß das erste Sperrmittel (35) einen im wesentlichen U-förmigen, an der Stütze (3) angebrachten Sperrbügel (35) umfaßt, dessen offene Seite bei in der Betriebsstellung befindlicher Stütze (3) dem rückwärtigen, von der Stütze (3) bei ihrer Verschwenkung zwischen der Betriebs- und der Außerbetriebsstellung überstrichenen Schienenabschnitt zugewandt ist, daß das zweite Sperrmittel (36) eine Sperrzunge (36) umfaßt, und daß der Sperrbügel (35) und die Sperrzunge (36) auf einander gegenüberliegenden Seiten einer durch die Befestigungseinrichtung (22,24,25) gelegten, quer zur Schiene (1) verlaufenden Querachse (Q) angeordnet sind.

9. Fahrradhalter nach wenigstens einem der vorhergehenden Ansprüche,
   **dadurch gekennzeichnet,**
   daß die Befestigungseinrichtung (22,24,25) wenigstens eine Schraubbefestigung mit einer Flügelmutter (25) umfaßt.

10. Fahrradhalter nach Anspruch 9,
    **dadurch gekennzeichnet,**
    daß die Sperranordnung (35,36;44) während des Sperreingriffs mit der Befestigungseinrichtung (22,24,25) in den in der Drehebene der Flügel der Flügelmutter (25) liegenden, von den äußersten Enden der Flügel bei Drehung der Flügelmutter (25) umschriebenen Kreis (41) sperrend eingreift.

11. Fahrradhalter nach wenigstens einem der vorhergehenden Ansprüche,
    **dadurch gekennzeichnet,**
    daß die Sicherungsanordnung (32) wenigstens ein durch die Befestigungseinrichtung (22,24,25) an Ort und Stelle gehaltenes, den Zugang zur Anlenkung (14,16) sperrendes bzw. ein Lösen derselben verhinderndes Sicherungsblech (32) umfaßt..

12. Fahrradhalter nach Anspruch 11,
**dadurch gekennzeichnet,**
daß die Anlenkung (14,16)wenigstens eine Schwenkachse in Form einer Kopfschraube (14) mit einer Mutter (16) und das Sicherungsblech (32) die Mutter (16) wenigstens teilweise formschlüssig umfaßt.

13. Fahrradhalter nach wenigstens einem der Ansprüche 2 bis 12,
**dadurch gekennzeichnet,**
daß die Arretieranordnung (28,31) wenigstens einen Arretiervorsprung (28,31) an der Spanneinrichtung (4) umfaßt, der sich bei in der Außerbetriebsstellung befindlicher Stütze (3) und gespannter Spanneinrichtung (4) in kraft- und/oder formschlüssigem Eingriffund bei nicht-gespannter Spanneinrichtung (4) außer Eingriff mit der Schiene (1) befindet.

14. Fahrradhalter nach Anspruch 13,
**dadurch gekennzeichnet,**
daß die Spanneinrichtung (4) zwei gegenläufig bewegbare Klemmbacken (17) mit je einem Arretiervorsprung (28,31) umfaßt.

15. Fahrradhalter nach Anspruch 13 oder 14,
**dadurch gekennzeichnet,**
daß die Schiene (1) im Eingriffsbereich der Arretieranordnung (28) ein Verstärkungselement (29) aufweist.

16. Fahrradhalter nach wenigstens einem der Ansprüche 13 bis 15,
**dadurch gekennzeichnet,**
daß die Schiene (1) U-oder V- förmig mit umgerollten Wulsträndern (7) und wenigstens einer der Wulstränder (7) für den Formschlußeingriff mit wenigstens einem der Arretiervorsprünge (31) ausgebildet ist.

17. Fahrradhalter nach wenigstens einem der Ansprüche 13 bis 15,
**dadurch gekennzeichnet,**
daß das Verstärkungselement (29) wenigstens einen aus der Schiene (1) herhausragenden Randvorsprung (30) aufweist, der für den Formschlußeingriff mit einem der Arretiervorsprünge (28) ausgebildet ist.

FIG. 1

EP 0 482 650 A1

# FIG. 2

EP 0 482 650 A1

# FIG. 3

# FIG. 4

10

# FIG. 5

# FIG. 6

FIG. 7

EP 0 482 650 A1

FIG. 8

FIG. 9

FIG. 10

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-9 011 206  (C.ENGLANDER)<br>* das ganze Dokument * *<br>– – – | 1 | B 60 R 9/10 |
| A | WO-A-8 901 884  (J.S.PRODUCTS)<br>* das ganze Dokument * *<br>– – – | 1 | |
| A | EP-A-0 141 757  (MACOREX)<br>* das ganze Dokument * *<br>– – – | 1 | |
| A | DE-U-8 813 795  (VOTEX)<br>* das ganze Dokument * *<br>– – – – – | 1 | |

**RECHERCHIERTE SACHGEBIETE (Int. Cl.5)**

B 60 R
B 62 H

**Der vorliegende Recherchenbericht wurde für alle Patentansprüche erstellt**

| Recherchenort | Abschlußdatum der Recherche | Prüfer |
|---|---|---|
| Den Haag | 27 Januar 92 | CZAJKOWSKI A.R. |

KATEGORIE DER GENANNTEN DOKUMENTE
X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
--------------------------------------------------------------
& : Mitglied der gleichen Patentfamilie,
　　übereinstimmendes Dokument